# EUROPEAN PATENT SPECIFICATION

(11) **EP 4 446 263 B1**
(45) Date of publication and mention of the grant of the patent: **05.11.2025**
(21) Application number: 24168355.6
(22) Date of filing: 04.04.2024
(51) Int. Cl.: B65G 47/08, B65G 47/53, B65G 47/71, B65G 47/82, B65G 54/02

(54) **PACKAGE GROUPING APPARATUS FOR A PACKAGING MACHINE, PACKAGING MACHINE HAVING A PACKAGE GROUPING APPARATUS AND A METHOD OF GROUPING PACKAGES**
VERPACKUNGSGRUPPIERUNGSVORRICHTUNG FÜR EINE VERPACKUNGSMASCHINE, VERPACKUNGSMASCHINE MIT EINER VERPACKUNGSGRUPPIERUNGSVORRICHTUNG UND VERFAHREN ZUM GRUPPIEREN VON VERPACKUNGEN
APPAREIL DE GROUPEMENT D'EMBALLAGES POUR UNE MACHINE D'EMBALLAGE, MACHINE D'EMBALLAGE AYANT UN APPAREIL DE GROUPEMENT D'EMBALLAGES ET PROCÉDÉ DE GROUPEMENT D'EMBALLAGES

(30) Priority: 12.04.2023 IT 202300006984
(43) Date of publication of application: 16.10.2024
(73) Proprietor: Tetra Laval Holdings & Finance S.A., 1009 Pully (CH)
(72) Inventor: PICCININI, Giorgio, 41123 MODENA (IT); BASSISSI, Fabio, 41123 MODENA (IT)
(74) Representative: Tetra Pak Patent Attorneys

(56) References cited:
- FR-A1- 3 075 188
- FR-A1- 3 081 850
- US-A1- 2018 186 579

## Description

### TECHNICAL FIELD

The present invention relates to a package grouping apparatus for the grouping of packages, in particular of packages filled with a pourable product, even more particular of packages formed from a multilayer packaging material and filled with a pourable product.

Advantageously, the present invention also relates to a packaging machine having a package grouping apparatus.

Advantageously, the present invention also relates to a method of grouping packages, in particular of packages filled with a pourable product, even more particular of packages formed from a multilayer packaging material and filled with a pourable product.

### BACKGROUND ART

FR 3 081 850 A1 discloses a package grouping apparatus according to the preamble of claim 1 and a method of grouping a succession of packages according to the preamble of claim 14.

As is known, many liquid or pourable food products, such as fruit juice, UHT (ultra-high-temperature treated) milk, wine, tomato sauce, etc., are sold in composite packages made of a multilayer packaging material.

A typical example is the parallelepiped-shaped package for pourable food products known as Tetra Brik Aseptic (registered trademark), which is made by sealing and folding a laminated strip packaging material. The packaging material has a multilayer structure comprising a carton and/or paper base layer, covered on both sides with layers of heat-seal plastic material, e.g. polyethylene. In the case of aseptic packages for long-storage products, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Composite packages of this sort are normally produced within fully automatic packaging machines, which at least form the composite packages from the multilayer packaging material and fill the composite packages with the pourable food product.

A typical packaging machine comprises at least a package forming apparatus, which forms the composite packages from the multilayer packaging material and which also fills the composite packages with the pourable food product.

Additionally, such packaging machines also comprise downstream equipment, which receives the composite packages from the package forming apparatus.

The downstream equipment may comprise a package grouping apparatus configured to form respective groups of packages from a succession of advancing packages.

Known package grouping apparatuses may comprise mechanical means so as to divide the succession of packages into a plurality of parallel streams of packages and to compact some of the packages of the plurality of streams for obtaining respective groups.

Even though the known package grouping apparatuses work satisfyingly well, a need is felt in the sector to further improve the known Package grouping apparatuses and the respective method of distributing packages.

### DISCLOSURE OF INVENTION

It is therefore an object of the present invention to provide in an improved package grouping apparatus for forming groups of packages.

It is a further object of the present invention to provide an improved packaging machine having a grouping apparatus.

It is another object of the present invention to provide an improved method of forming groups of packages.

According to the present invention, there is provided a package grouping apparatus according to the independent claim 1.

Preferred embodiments of the package grouping apparatus are claimed in the claims being directly or indirectly dependent on claim 1.

According to the present invention, there is also provided a packaging machine according to claim 12.

According to the present invention, there is also provided a method according to the independent claim 14.

Preferred embodiments of the method are claimed in the claims being directly or indirectly dependent on claim 14.

### BRIEF DESCRIPTION OF THE DRAWINGS

Three non-limiting embodiments of the present invention will be described by way of example with reference to the accompanying drawings, in which:
Figure 1 is a schematic top view of a package grouping apparatus according to a first embodiment of the present invention, with parts removed for clarity;
Figures 2a to 2d is a schematic top view of the package grouping apparatus of Figure 1 during different moments of operation, with parts removed for clarity;
Figure 3 is a schematic top view of a package grouping apparatus according to a second embodiment of the present invention, with parts removed for clarity; and
Figure 4 is a schematic top view of a package grouping apparatus according to a third embodiment of the present invention, with parts removed for clarity.

### BEST MODES FOR CARRYING OUT THE INVENTION

Number 1 indicates as a whole a package grouping apparatus for forming groups 2 of packages 3.

Preferentially, packages 3 are filled with a pourable product, more preferentially a pourable food product, such as milk, cream, fruit juice, wine, tomato sauce, sugar, salt, emulsions, solutions containing solid particles (e.g. legumes) .

Preferentially, packages 3 may be formed from a multilayer packaging material.

In more detail, the multilayer packaging material may comprise at least a layer of fibrous material, such as e.g. a paper or cardboard layer, and at least two layers of heat-seal plastic material, e.g. polyethylene, interposing the layer of fibrous material in between one another. One of these two layers of heat-seal plastic material defines an inner face of the composite packages 3 eventually contacting the pourable food product packaged within packages 3.

According to some possible non-limiting embodiments, the multilayer packaging material may also comprise a layer of gas- and light-barrier material, e.g. aluminum foil or ethylene vinyl alcohol (EVOH) film, in particular being arranged between one of the layers of the heat-seal plastic material and the layer of fibrous material. In particular, the multilayer packaging material may also comprise a further layer of heat-seal plastic material being interposed between the layer of gas- and light-barrier material and the layer of fibrous material.

According to some preferred non-limiting embodiments, package grouping apparatus 1 may be part of a packaging machine, the packaging machine being configured to form packages 3 filled with a pourable product, preferentially packages 3 formed from the multilayer packaging material.

Preferentially, the packaging machine may comprise a package forming apparatus configured to form and/or fill packages 3. Moreover, the packaging machine may comprise a conveyor configured to convey packages 3 from the package forming apparatus to package grouping apparatus 1.

The package forming apparatus may be arranged upstream of package grouping apparatus 1; i.e. package grouping apparatus 1 may receive, in use, packages 3 from the package forming apparatus.

According to some preferred non-limiting embodiments, the multilayer packaging material may be provided in the form of a web, in particular being wound up on a bobbin. Accordingly, the package forming apparatus may be configured to sterilize, to form, seal, fill and cut the web so as to obtain packages 3 being filled with the pourable product. In further detail, the package forming apparatus may be configured to form a tube from the web of the multilayer packaging material, to longitudinally seal the tube, to fill the tube with the pourable product and to transversally seal and cut the tube.

In more detail, the web may comprise a succession of connected blanks. Preferentially, the blanks may be defined by a succession of repeated patterns provided on the web, more preferentially each pattern defining at least partially the aesthetical appearance of the finalized package 2.

Alternatively, the multilayer packaging material may be provided in the form of single package blank, which, in use, are singularly formed and filled.

In more detail, each package 3 may extend along a longitudinal axis and may comprise at least two transversal walls (being transversal to the respective longitudinal axis) and being disposed at opposite sides of package 3 and a side wall extending between the transversal walls.

More specifically, one respective transversal wall of each package 3 may define a bottom wall and the other respective transversal wall may define a top wall. In particular, the bottom wall may define a support surface adapted to be placed on a (horizontal) plane or any other kind of support.

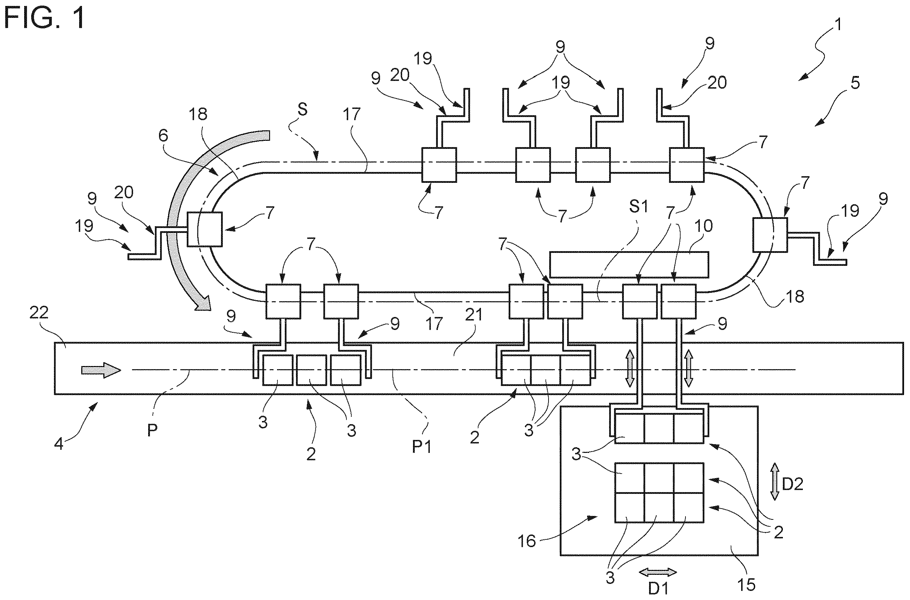

With particular reference to Figures 1, package grouping apparatus 1 may comprise:
- an inlet conveying device 4 configured to advance the succession of packages 3 along an advancement path P; and
- a grouping system 5 configured to form one or more groups 2 of packages 3.

In more detail, grouping system 5 may be configured to form one or more groups 2 of packages 3 during advancement of packages 3 along advancement path P, preferentially along a grouping portion P1 of advancement path P. Preferentially, grouping portion P1 may have a rectilinear shape.

Advantageously, each group 2 may comprise at least one leading package 3 and one trailing package 3.

In more detail, each trailing package 3 is the respective package 3 of the respective group 2 being arranged upstream with respect to the other packages 3 of the respective group 2 and with regard to advancement path P and each leading package 3 is arranged downstream with respect to the other packages 3 of the respective group 2 and with regard to advancement path P. In alternative words, each leading package 3 is the first package 3 of the respective group 2 and each trailing package 3 is the last package 3 of the respective group 2 and with respect to advancement path P.

Advantageously, the packages 3 of each group 2 are arranged in a row; i.e. one after the other.

Preferentially, grouping system 5 may be configured to compact the respective packages 3 of each group 2; i.e. each package 3 of each group 2 abuts against at least one neighboring package 3 of the respective group 2. In more detail, the respective leading package 3 and the respective trailing package 3 of each group 2 are in contact with only one neighboring package 3, while these packages 3 of each group 2 which are interposed between the respective leading package 3 and the respective trailing package 3 are in contact with two respective neighboring packages 3 (in particular, one neighboring package 3 being arranged upstream and the other neighboring package 3 being arranged downstream).

Advantageously and as will be explained in more detail further below, prior to operation of grouping system 5, packages 3 advancing, in use, along advancement path P are arranged one after the other, e.g. packages 3 may be spaced apart from one another (i.e. not being in contact with one another). Operation of grouping system 5 allows to define groups 2 of packages 3 and to compact the respective packages 3 (i.e. after compaction, the respective packages 3 are approached to one another and each one is in contact with at least one other package 3 of the respective group 2).

With particular reference to Figures 1 to 2d, grouping system 5 may comprise:
- an endless carrier 6;
- a plurality of independent carts 7 moveably coupled to endless carrier 6; and
- an actuation unit configured to selectively advance carts 7 along endless carrier 6 and along an endless path S, preferentially defined by (the shape of) endless carrier 6.

Each cart 7 may comprise a respective engagement element 9, each engagement element 9 being configured to be controlled into abutment with at least one package 3.

In more detail, the actuation unit may be configured to control advancement of independent carts 7 such to form, preferentially to at least temporaneously form, for each group 2 of packages 3 a respective pair of independent carts 7, preferentially the respective pair of carts 7 being controlled such to define the packages 3 being part of the respective group 2, and more preferentially to also compact the respective packages 3.

In further detail, the actuation unit may be configured to control the respective carts 7 of each pair such that the respective engagement element 9 of one of the independent carts 7 engages with the respective leading package 3 and the respective engagement element 9 of the other one of the respective independent carts 7 engages the respective trailing package 3.

More specifically, each pair of carts 7 comprises a leading cart 7 and a trailing cart 7 with regard to endless path S; i.e. the respective leading cart 7 is arranged upstream from the respective trailing cart 7.

Moreover, the actuation unit may be configured such to control advancement of the respective leading cart 7 and of the respective trailing cart 7 such that the engagement element 9 of the respective leading cart 7 and of the respective trailing cart 7 engage, respectively, the leading package 3 and the trailing package 3.

Advantageously, the actuation unit is configured to control advancement of the respective carts 7 of each pair of carts 7 such that the respective packages 3 of each group 2 are interposed between the respective engagement elements 9.

According to some preferred embodiments, the actuation unit may also be configured to control advancement of the respective carts 7 of each pair of carts 7 such to compact the respective packages 3 of the respective group 2 (i.e. the respective packages 3 are brought into contact with one another; in other words, each package 3 of each group 2 is after compaction in contact with at least one other package 3 of the respective group 2).

Advantageously, each independent cart 7 comprises a powering unit configured to control movement of the respective engagement element 9 from a respective rest position to a respective active position, and preferentially from the respective active position to the respective rest position.

Preferentially, each engagement element 9 may be in a retracted position and an extracted position when being controlled into, respectively, the respective rest position and the respective active position. Each engagement element 9 moves away from the endless carrier 6 when being controlled from the rest (retracted) position to the active (extracted) position. Each engagement element 9 moves towards the endless carrier 6 when being controlled from the rest (retracted) position to the active (extracted) position.

In more detail, each engagement element 9 may be at least rectilinearly moveable between the respective rest position and the respective active position.

More specifically, each engagement element 9 may be configured such to allow for the grouping and compaction of the respective group 2 when being in the respective rest position and to move, in particular in collaboration with the respective engagement element 9 of the other cart 7 of the respective pair of carts 7, the respective group 2, preferentially so as to discharge the respective group 2 from inlet conveying device 4.

In more detail, each powering unit may be configured to control movement of the respective engagement element 9 from the respective rest position to the respective active position after formation of the respective group 2 of packages 3 and for discharging the respective group 2 away from inlet conveying device 4.

Preferentially, grouping system 5 may be configured to simultaneously control the respective engagement elements 9 of the respective carts 7 of each pair from the respective rest positions to the respective active positions.

Additionally, grouping system 5 may also comprise at least one energy transfer device 10 configured to transfer energy to the powering units of carts 7 during advancement of carts 7 along an energy transfer portion S1 of endless path S.

Energy transfer device 10 may be configured such to provide to the powering units the energy needed to control the movement of the respective engagement elements 9 from the respective rest positions to the respective active positions, and preferentially from the respective active positions to the respective rest positions.

According to some preferred non-limiting embodiments, energy transfer device 10 may be arranged such that the powering units receive the energy from energy transfer device 10 while the respective engagement elements 9 are controlled to move from the respective rest position to the respective active position, and preferentially also while controlling movement of the respective engagement elements 9 back from the respective active position to the respective rest configuration.

In other words, each powering unit may be configured to move the respective engagement element 9 from the rest position to the active position during advancement of the respective independent cart 7 along energy transfer portion S1. In this way, one avoids the need to provide for significant energy storages provided on carts 7.

According to some preferred non-limiting embodiments, energy transfer portion S1 may have a rectilinear shape. Such a solution is favorable as it is possible to transfer the energy to the powering units while moving the respective engagement elements 9 to the respective active positions and while group 2 of packages 3 advances along a rectilinear portion of advancement path P. This allows an easier handling of groups 2 in comparison to the case of removing groups 2 from inlet conveying device 4 during movement of groups 2 along curved portions.

According to some possible non-limiting embodiments, grouping system 5 may also comprise at least one communication device configured to communicate with carts 7, preferentially so as to exchange data, more preferentially in a bidirectional manner, between the communication device and a respective communication group of each cart 7.

Preferentially, each energy transfer device 10 may comprise one respective communication device.

Preferentially, each powering unit may comprise the respective communication group.

According to some preferred non-limiting embodiments, each communication device may be configured to communicate with carts 7, preferentially the respective powering units, such to control the energy transfer to powering units.

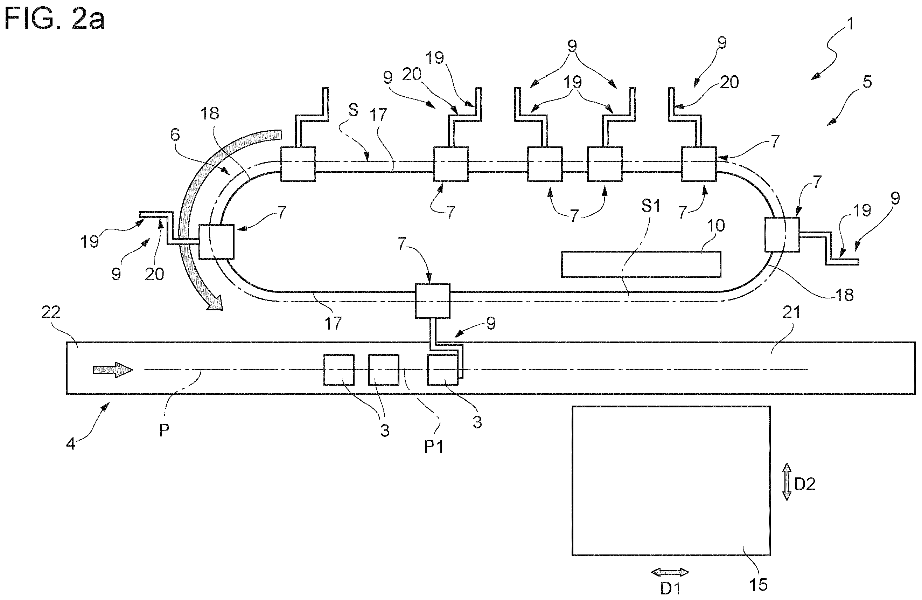

With particular reference to Figures 2a to 2d, an example of operation of grouping system 5 is shown. Figure 2a illustrates a succession of packages 3, in the specific case shown three, being advanced by inlet conveying device 4 along advancement path P. In the specific case shown, the packages 3 are spaced from one another (i.e. they are not in contact with one another), e.g. the packages 3 may be unequally spaced apart from one another or, in an alternative case not shown, may be equally spaced apart from one another.

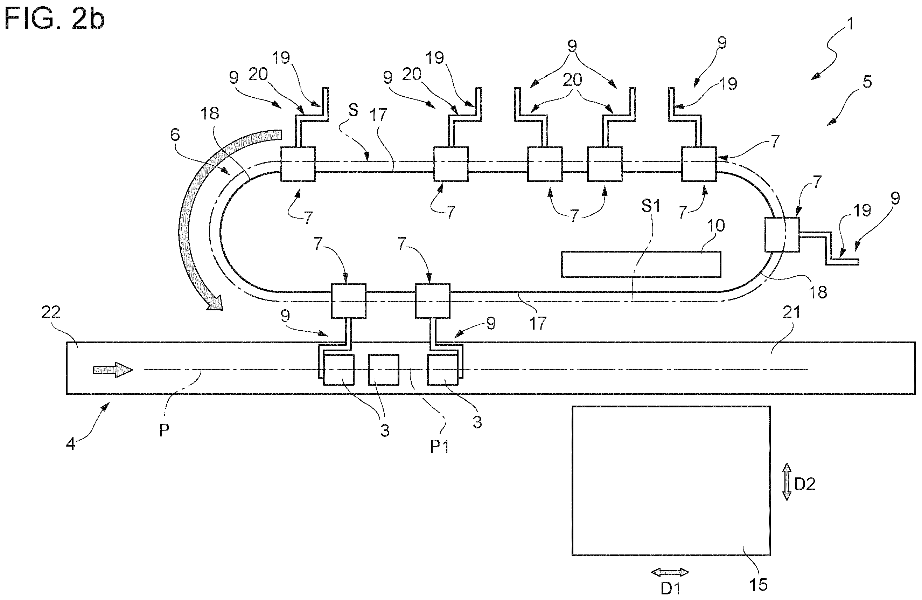

One of the respective carriers 7, in particular the leading carrier 7, of the respective pair advances such that the respective engagement element 9 is arranged upstream from the respective leading package 3, preferentially the respective engagement element 9 is put into contact with the respective leading package 3. The other one of the respective carriers 7, in particular the trailing carrier 7, of the respective pair advances such that the respective engagement element 9 is arranged downstream from the respective trailing package 3. As shown in Figures 2a and 2b, during advancement of the respective packages 3 along advancement path P, the trailing carrier 7 advances such that the group 2 has the desired number of packages 3, in the specific case shown three, and is put into contact with the trailing package 3, preferentially thereby interposing the respective packages 3 of the respective group 2 in between the respective engagement elements 9.

It should be noted that advancement of the respective leading carrier 7 and of the respective trailing carrier 7 may be coordinated such to obtain the desired group 2.

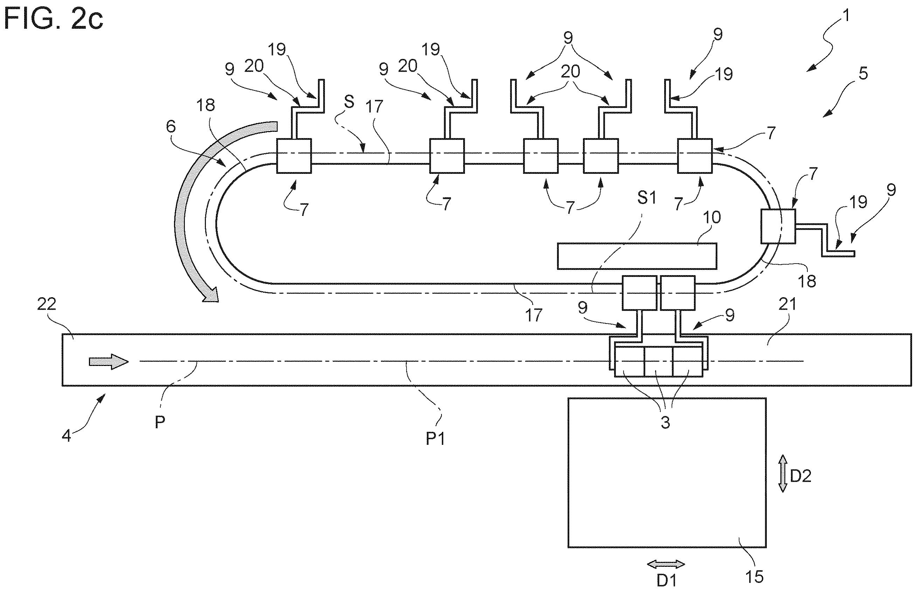

As disclosed in Figure 2c, the relative distance between the respective carts 7 of the pair is reduced so as to compact the respective packages 3 of the respective group 2.

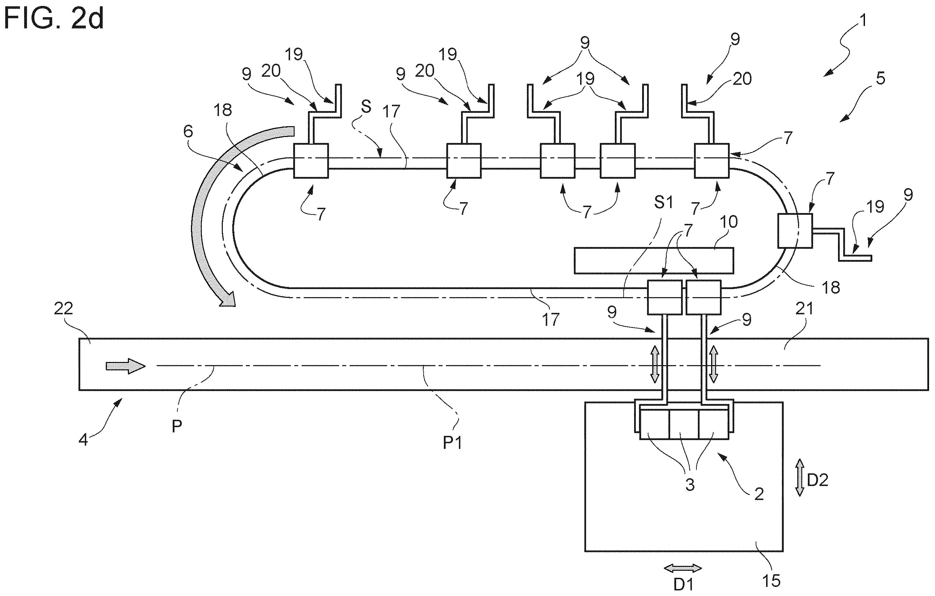

Finally and as illustrated in Figure 2d, the two respective engagement elements 9 of the respective carriers 7 are simultaneously controlled from the respective rest positions to the respective active positions and the respective group 2 of packages 3 is removed from inlet conveying device 4.

The energy needed to control movement of engagement elements 9 from the respective rest positions to the respective active positions, and preferentially back to the respective rest positions, is provided to the powering units through energy transfer from energy transfer device 10 to the powering units. Preferentially, the energy transfer occurs while the respective engagement elements 9 are moved from the respective rest positions to the respective active positions.

According to some preferred non-limiting embodiments, energy transfer device 10 may comprise one or more emitting coils and each powering unit may comprise at least one receiving coil. Moreover, the one or more emitting coils and each receiving coil may be configured such to transfer energy by means of induction energy transfer.

In further detail, the emitting coils are configured to generate an electromagnetic field and each receiving coil is configured to interact with the electromagnetic field so as to generate a current within the receiving coil. The thereby generated current can be used by the respective powering unit for moving the respective engagement element 9 from the rest position to the active position.

According to some possible embodiments, powering units may be configured to directly control movement of the respective engagement elements 9 between the respective rest positions to the active positions. E.g. each powering unit may comprise at least one actuator connected to the respective engagement element 9 and the powering unit may be configured to control operation of the actuator such that the actuator moves the respective engagement element 9.

Alternatively or in addition, grouping system 5 may comprise one or more mechanical cams. Preferentially, each mechanical cam may be configured such to allow for movement of engagement elements 9 at least from the respective rest positions to the respective active positions. Preferentially, each mechanical cam may be arranged adjacent to a section of advancement path P, at which groups 2 may be discharged from inlet conveying device 4.

Moreover, each powering unit may comprise at least one respective cam follower and at least one coupling group connected to the respective cam follower and coupling the respective cam follower to the respective engagement element 9.

Furthermore, each powering unit may be configured to control the respective cam follower between a respective idle position and a respective operative position. In particular, each cam follower being controlled in the respective operative portion is adapted to interact with at least one mechanical cam at a time.

Additionally, each powering unit may be configured such to selectively control the respective cam follower in the respective operative position such that cam follower interacts with one respective mechanical cam at a time and the interaction is such that the respective engagement element 9 moves from the respective rest position to the respective active position. According to such an embodiment, the energy of the powering unit may be set to be sufficient to move the cam follower and the energy for moving the respective group 2 originates from the interaction of the respective cam follower with the mechanical cam.

Moreover, movement of each engagement element 9 from the respective active position to the respective rest position may be guided by interaction between the respective cam follower and the mechanical cam.

Preferentially, each powering unit may be configured to control each cam follower back to the respective idle position, in the case that the respective engagement element 9 shall move back to the respective rest position.

With particular reference to Figures 1 to 2d, package grouping apparatus 1 may further comprise at least one outlet conveying system 15 configured to receive at least one respective group 2 of packages 3 discharged from inlet conveying device 4. Preferentially, outlet conveying system 15 may be configured to receive the respective group 2 during movement of the respective engagement elements 9 from the respective rest position to the respective active position.

According to some possible non-limiting embodiments, outlet conveying system 15 may be configured to receive a plurality of groups 2 of packages 3 so as to allow for the generation of a batch 16 of groups 2 of packages 3.

Preferentially, each batch 16 may have an array arrangement of packages 3; i.e. packages 3 may be arranged in two dimensions; in other words, packages 3 may be aligned with respect to one another along a first direction D1 and a second direction D2 perpendicular to first direction D1.

Preferentially, each batch 16 may result from feeding a plurality of groups 2 of packages 3 onto outlet conveying system 15, and more preferentially such that each group 2 is put into contact with at least one other group 2 of packages 3.

According to some preferred non-limiting embodiments, outlet conveying system 15 may be configured to further advance groups 2 and/or batches 16. E.g. outlet conveying system 15 may be configured to advance groups 2 and/or batches 16 to one or more final packaging apparatuses (of the packaging machine and being) configured to further pack groups 2 and/or batches 16. Final packaging apparatuses may be chosen from the group of cardboard packers configured to pack each group 2 and/or batch 16 of packages 3 in a carton box and a wrapping machine configured to wrap each group 2 and/or batch 16 of packages 2 within a wrapping material, such as a web of plastic material.

In particular, outlet conveying system 15 may be configured to receive one group 2 after the other group 2 of a plurality of respective groups 2 so as to form the respective batch 16. Preferentially, outlet conveying system 15 may be configured to further advance the respective batch 16 as a whole and not only the single received groups 2.

In further detail, outlet conveying system 15 may be arranged adjacent to inlet conveying device 4.

According to some possible non-limiting embodiments, at least one respective mechanical cam may be associated to outlet conveying system 15. Preferentially, each powering unit may be configured to control the respective cam follower into the respective operative position so as to allow transfer of the respective group 2 onto outlet conveying system 15.

With particular reference to Figures 1 to 2d, endless carrier 6 may have an annular shape.

Preferentially, endless carrier 6 may comprises at least one rectilinear track 17. More preferentially, energy transfer device 10 may be arranged such that energy transfer portion S1 may be parallel to a portion of rectilinear track 17.

More specifically, endless carrier 6 may comprise a plurality of rectilinear tracks 17 and a plurality of curved tracks 18.

In the specific embodiment disclosed, endless track 15 has an oval shape.

In particular, endless carrier 6 may comprise two rectilinear tracks 17 spaced apart from, and preferentially parallel to one another, and two opposed curved tracks 18 connected to rectilinear tracks 17.

With particular reference to Figures 1 to 2d, each engagement element 9 may be configured to at least laterally contact the respective packages 3. Preferentially, at least each engagement element 9 may be configured to contact the respective side walls of the respective packages 3.

According to some preferred non-limiting embodiments, each engagement element 9 may comprise at least a first engagement surface 19 configured to contact the respective packages 3. In particular, each first engagement surface 19 may be arranged such to permit the compaction of the respective packages 3 of the respective group 2.

Preferentially, each group 2 may be interposed between the two respective first engagement surfaces 19.

Preferentially, each engagement element 9 may also comprise a second engagement surface 20 configured to contact the respective packages 3, and in particular being configured to facilitate the discharging of the respective groups 2 from inlet conveying device 4.

Preferentially, the first engagement surface 19 and the second engagement surface 20 may be perpendicular to one another.

According to some preferred non-limiting embodiments, the actuation unit may be configured to selectively generate an electromagnetic field for selectively interacting with the plurality of carts 7 and for selectively advancing the plurality of carts 7 along endless path S.

Preferentially, the actuation unit may comprise an annular housing and a plurality of coils arranged along and within the annular housing.

Moreover, the actuation unit may comprise a powering group operatively coupled to the plurality of coils and configured to selectively power each one of the plurality of coils.

It should be noted that the selective advancement of carts 7 means that the actuation unit may accelerate and decelerate each cart 7 independently from one another. Certainly, the actuation unit operates such to avoid any collisions between carts 7 and such to coordinate movement of the respective carts 7 of each pair of carts 7 with respect to one another.

According to some preferred non-limiting embodiments, each cart 7 may comprise a magnetic and/or paramagnetic element configured to interact with the electromagnetic field generated by the actuation unit.

With particular reference to Figures 1 to 2d, inlet conveying device 4 may comprise at least a rectilinear section 21. Preferentially, each powering unit may be configured to control the respective engagement element 9 from the respective rest position to the respective active position during advancement of the respective group 2 of packages 3 along at least a portion of rectilinear section 21.

Preferentially, rectilinear section 21 may be parallel to energy transfer portion S1.

According to some preferred non-limiting embodiments, inlet conveying device 4 may comprise a belt conveyor 22 configured to carry packages 3 and to advance packages 3 along advancement path P.

In use, package grouping apparatus 1 forms groups 2 of packages 3. Preferentially, the package grouping apparatus 1 receives the packages 3 from the package forming apparatus.

More specifically, the package forming apparatus forms and fills packages 3, preferentially from the multilayer packaging material.

In more detail, operation of package distributing apparatus 1 and the respective method of distributing the succession of packages 3 comprises the steps of:
- advancing the succession of packages 3 along advancement path P; and
- grouping packages 3 while packages 3 advance along advancement path P into one or more groups 2 of packages 3.

Advantageously, the step of grouping comprises the sub-steps of:
- selectively advancing, preferentially by operation of the actuation unit, carts 7 along endless path S such to form for each group 2 of packages 3 a respective pair of carts 7 of which the respective engagement element 9 of one of the carts 7 engages with the respective leading package 3 and the respective engagement element 9 of the other one of the respective carts 7 engages the respective trailing package 3;
- compacting the packages 3 of the respective group 2 of packages 3, preferentially by reducing the relative distance between the respective carts 7 of the respective pair with respect to one another;
- controlling movement by operation of the respective powering unit the respective engagement element 9 between the respective rest position to the respective active position after formation of the respective group 2 of packages 3 and for discharging the respective group 2 from inlet conveying device 4; and
- transferring energy from an energy transfer device (10) to the powering units of the independent carts (7) during advancement of the independent carts (7) along an energy transfer portion (S1) of the endless path (S) and such to provide for the energy needed to control the respective engagement elements (9) from the respective rest position to the respective active position during the sub-step of controlling.

According to some preferred non-limiting embodiments, the sub-step of controlling may be executed during the step of transferring energy.

According to some preferred non-limiting embodiments, during the step of controlling, the respective groups 2 of packages 3 are fed to an outlet conveying system 15.

According to some preferred non-limiting embodiments, operation of package grouping apparatus 1 also foresees that engagement elements 9 may be moved back to the respective rest position after discharging the respective group 2 and/or after transferring the respective group 2 to outlet conveying system 15.

According to some possible embodiments, during the sub-step of controlling, each powering unit may move the respective cam follower into the respective operative position and such that the respective cam follower interact with at least one respective mechanical cam leading to movement of the respective engagement element 9 into the respective active position.

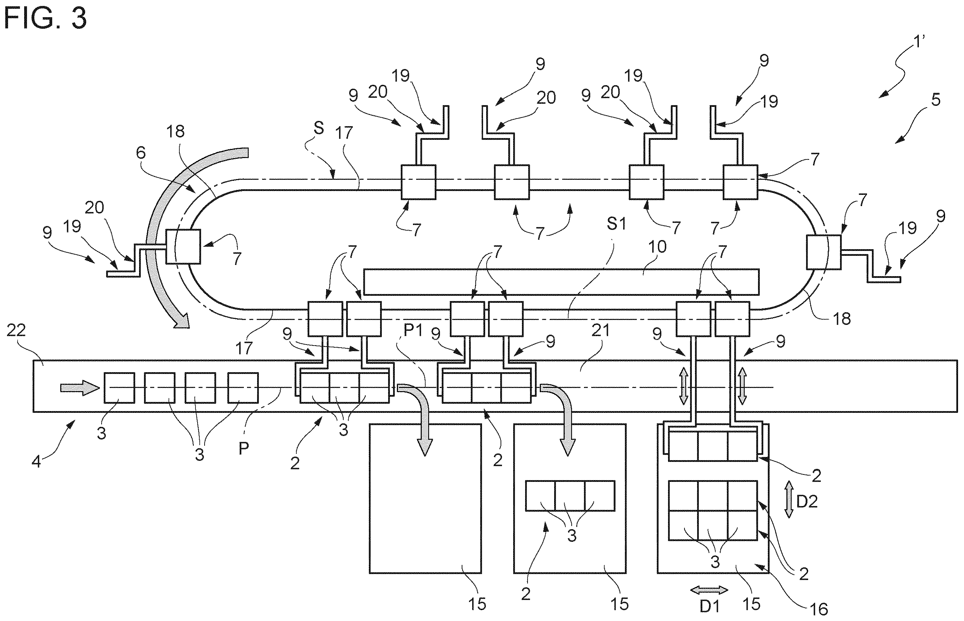

With reference to Figure 3, number 1' indicates an alternative package grouping apparatus according to the present invention; as package grouping apparatus 1' is similar to package grouping apparatus 1, the following description is limited to the differences between them, and using the same references, where possible, for identical or corresponding parts.

In particular, package grouping apparatus 1' differs from package grouping apparatus 1 in comprising a plurality of outlet conveying systems 15, preferentially each one adjacently arranged to inlet conveying device 4.

Moreover, package grouping apparatus 1' may be configured such to transfer each group 2 to one respective outlet conveying system 15.

Preferentially, outlet conveying systems 15 may be spaced apart from one another along advancement path P, preferentially along grouping portion P1.

According to some possible non-limiting embodiments, at least one respective mechanical cam may be associated to each outlet conveying system 15. Preferentially, each powering unit may be configured to selectively control the respective cam follower into the respective operative position such that the respective group 2 is transferred onto the desired outlet conveying system 15. E.g., in use, if group 2 is adjacent to one outlet conveying system 15 and the group 2 is not to be transferred onto the outlet conveying system 15, the respective powering unit does not control the respective cam follower into the operative position, but only controls the respective cam follower into the respective operative position such that the respective group 2 is transferred onto the desired outlet conveying system 15.

As operation of package grouping apparatus 1' is similar to operation of packaging grouping apparatus 1, we refer to the differences between operation of package grouping apparatus 1' and package grouping apparatus 1.

In particular, the difference resides in that groups 2 are selectively fed to one of outlet conveying systems 15.

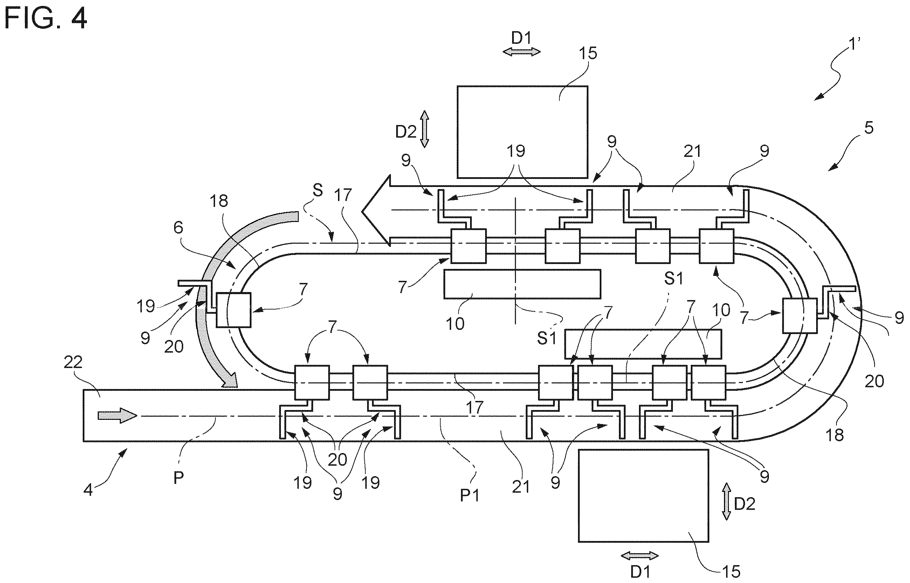

With reference to Figure 4, number 1" indicates an alternative package grouping apparatus according to the present invention; as package grouping apparatus 1" is similar to package grouping apparatus 1, the following description is limited to the differences between them, and using the same references, where possible, for identical or corresponding parts.

In particular, package grouping apparatus 1" differs from package grouping apparatus 1 in comprising more than one energy transfer device 10 arranged at different positions.

Preferentially, each energy transfer device 10 may be associated to one respective rectilinear track 17.

According to the specific example shown, package grouping apparatus 1" comprises two energy transfer devices 10, one associated to a first rectilinear track 17 and the other one associated to a second rectilinear track 17 different from the first rectilinear track 17. Preferentially, the first rectilinear track 17 and the second rectilinear track 17 may be connected to one another by a respective curved track 18.

Additionally, package grouping apparatus 1" differs from package grouping apparatus 1 also in comprising more than one outlet conveying systems 15 arranged such that at least one respective outlet conveying system 15 may be associated to each energy transfer device 10.

Preferentially, groups 2 can be transferred to the one or other outlet conveying system 15 in function of whether the one or other energy transfer device 10 transfers, in use, energy to the respective powering units.

As operation of package grouping apparatus 1" is similar to operation of packaging grouping apparatus 1, we refer to the differences between operation of package grouping apparatus 1" and package grouping apparatus 1.

In particular, powering units receive energy from one or the other energy transfer device 10 so as to transfer the respective groups 2 to the desired outlet conveying system 15 by selectively moving the respective engagement elements 9 from the respective rest position to the respective active position.

The advantages of package grouping apparatus 1, 1' and 1" and/or the method of grouping according to the present invention will be clear from the foregoing description.

In particular, it is possible to form groups 2 and/or batches 16 of packages 3 in a reduced space with high dynamics.

Additionally, package grouping apparatuses 1, 1' and 1'' can be easily adapted to format changes.

Moreover, package grouping apparatus 1, 1' and 1'' can be easily modified e.g. by adding and/or activating and/or deactivating outlet conveying systems 15 so as to adapted to the specific temporary or permanent requirements.

A further advantage of package grouping apparatus 1, 1' and 1'' resides in a reduction of the mechanical components.

Clearly, changes may be made to package grouping apparatus 1, 1' or 1'' and/or the packaging machine and/or the method of grouping packages 3 as described herein without, however, departing from the scope of protection as defined in the accompanying claims.

## Claims

1. Package grouping apparatus (1, 1', 1") for grouping a succession of packages (3) comprising:
- an inlet conveying device (4) configured to advance a succession of packages (3) along an advancement path (P); and
- a grouping system (5) configured to form one or more groups (2) of packages (3) from the packages (3) advancing along the advancement path (P); each group (2) of packages (3) comprises one leading package (3) and one trailing package (3);
wherein the grouping system (5) comprises:
- an endless carrier (6);
- a plurality of independent carts (7) moveably coupled to the endless carrier (6) and each having at least one engagement element (9); and
- an actuation unit configured to selectively advance the independent carts (7) along the endless carrier (6) and along an endless path (S);
wherein the actuation unit is configured to control advancement of the plurality of independent carts (7) such to form for each group (2) of packages (3) a respective pair of independent carts (7) of which the respective engagement element (9) of one of the independent carts (7) engages with the respective leading package (3) and of the respective engagement element (9) of the other one of the respective independent carts (7) engages the respective trailing package (3);
wherein the actuation unit is further configured to control the independent carts (7) of each pair of independent carts (7) such to compact the packages (3) of the respective group (2) of packages (3);
**characterized in that**
each independent cart (7) comprises a powering unit configured to move the respective engagement element (9) between a respective rest position to a respective active position;
wherein the powering unit is configured to control movement of the respective engagement element (9) from the respective rest position to the respective active position after formation of the respective group (2) of packages (3) and for discharging the respective group (2) of packages (3) from the inlet conveying device (4);
wherein the grouping system (5) also comprises an energy transfer device (10) configured to transfer energy to the powering units of the independent carts (7) during advancement of the independent carts (7) along an energy transfer portion (S1) of the endless path (S) and such to provide for the energy needed to control the respective engagement element (9) from the respective rest position to the respective active position.

2. Package grouping apparatus according to claim 1, wherein each powering unit is configured to control movement of the respective engagement element (9) from the respective rest position to the respective active position during advancement of the respective independent cart (7) along the energy transfer portion (S1); and/or
the energy transfer device (10) is arranged such that each powering unit receives, in use, the energy from the energy transfer device (10) while controlling movement of the respective engagement element (9) from the respective rest position to the respective active position.

3. Package grouping apparatus according to claim 1 or 2, wherein the energy transfer portion (S1) has a rectilinear shape.

4. Package grouping apparatus according to any one of the preceding claims, wherein each powering unit is configured such to control the respective engagement element (9) from the respective rest position to the respective active position during advancement of the respective group (2) along a rectilinear portion of the advancement path (P).

5. Package grouping apparatus according to any one of the preceding claims, wherein the energy transfer device (10) comprises one or more emitting coils and each powering unit may comprise at least one receiving coil;
wherein the one or more emitting coils and each receiving coil are configured to transfer energy by means of induction energy transfer.

6. Package grouping apparatus according to any one of the preceding claims, further comprising at least one outlet conveying system (15) configured to receive at least one respective group (2) of packages (3) discharged from the inlet conveying device (4) during movement of the respective engagement elements (9) from the respective rest position to the respective active position.

7. Package grouping apparatus according to claim 6, wherein the outlet conveying system (15) is configured to receive a plurality of groups (2) of packages (3) so as to allow for the generation of a batch (16) of groups (2) of packages (3); wherein the packages (3) of each batch (16) present an array arrangement.

8. Package grouping apparatus according to claim 6 or 7, comprising at least two energy transfer devices and each one being configured to transfer energy to the powering units during advancement of the independent carts (7) along the respective energy transfer portions (10) of the endless path (S).

9. Package grouping apparatus according to any one of the preceding claims, wherein the packages (3) of each group (2) of packages (3) are arranged in a row.

10. Package grouping apparatus according to any one of the preceding claims, wherein the actuation unit is configured to selectively generate an electromagnetic field for selectively interacting with the plurality of carts (7) and for selectively advancing the plurality of carts (7).

11. Package grouping apparatus according to any one of the preceding claims, wherein the grouping system (5) comprises at least one mechanical cam;
wherein each powering unit comprises at least one respective cam follower and at least one coupling group connected to the respective cam follower and coupling the respective cam follower to the respective engagement element (9);
wherein each powering unit is configured to control the respective cam follower between a respective idle position and a respective operative position;
wherein each powering unit is configured such to selectively control the respective cam follower in the respective operative position such that cam follower interacts with the mechanical cam;
wherein the interaction between the cam follower and the mechanical cam is such that the respective engagement element (9) moves from the respective rest position to the respective active position.

12. Packaging machine configured to form packages (3) filled with a pourable product comprising a grouping apparatus (1, 1', 1") according to any one of the preceding claims.

13. Packaging machine according to claim 12, further comprising a package forming apparatus configured to form and fill the packages (3);
wherein the grouping apparatus (1, 1', 1") is arranged downstream from the package forming apparatus so as to receive the packages (3) from the package forming apparatus.

14. Method of grouping a succession of packages (3) comprising the steps of:
- advancing a succession of packages (3) along an advancement path (P) of an inlet conveying device (4); and
- grouping the packages (3) advancing along the advancement path (P) into one or more groups (2) of packages (3) from the packages (3), each group (2) of packages (3) having one leading package (3) and one trailing package (3);
wherein the step of grouping comprises the sub-steps of:
- selectively advancing a plurality of carts (7), each having a respective engagement element (9) and each being moveably arranged on an endless carrier (6), along an endless path (S) and such to form for each group (2) of packages (3) a respective pair of independent carts (7) of which the respective engagement element (9) of one of the independent carts (7) engages with the respective leading package (3) and the respective engagement element (9) of the other one of the respective independent carts (7) engages the respective trailing package (3);
- compacting the packages (3) of the respective group (2) of packages (3); **characterized by**
- controlling a movement by operation of a respective powering unit of the respective independent cart (7) of the respective engagement element (9) between a respective rest position to a respective active position after formation of the respective group (2) of packages (3) and for discharging the respective group (2) of packages (3) from the inlet conveying device (4);
- transferring energy from an energy transfer device (10) to the powering units of the independent carts (7) during advancement of the independent carts (7) along an energy transfer portion (S1) of the endless path (S) and such to provide for the energy needed to control the respective engagement elements (9) from the respective rest position to the respective active position during the sub-step of moving.

15. Method according to claim 14, wherein the sub-step of controlling is executed during the step of transferring energy.

## Patentansprüche

1. Paketgruppierungsvorrichtung (1, 1', 1") zum Gruppieren einer Folge von Paketen (3), die Folgendes umfasst:
- eine eintrittsseitige Transportvorrichtung (4), die konfiguriert ist, eine Folge von Paketen (3) entlang eines Beförderungswegs (P) zu befördern; und
- ein Gruppiersystem (5), das konfiguriert ist, eine oder mehrere Gruppen (2) von Paketen (3) aus den Paketen (3) zu bilden, die sich entlang des Beförderungswegs (P) vorwärts bewegen; wobei jede Gruppe (2) von Paketen (3) ein vorderes Paket (3) und ein hinteres Paket (3) umfasst;
wobei das Gruppiersystem (5) Folgendes umfasst:
- einen endlosen Träger (6);
- eine Vielzahl unabhängiger Karren (7), die beweglich mit dem endlosen Träger (6) gekoppelt sind und jeweils mindestens ein Eingriffselement (9) aufweisen; und
- eine Betätigungseinheit, die konfiguriert ist, die unabhängigen Karren (7) selektiv entlang des endlosen Trägers (6) und entlang eines endlosen Wegs (S) zu befördern;
wobei die Betätigungseinheit konfiguriert ist, die Beförderung der Vielzahl unabhängiger Karren (7) so zu steuern, dass für jede Gruppe (2) von Paketen (3) ein jeweiliges Paar unabhängiger Karren (7) gebildet wird, von denen das jeweilige Eingriffselement (9) eines der unabhängigen Karren (7) mit dem jeweiligen vorderen Paket (3) in Eingriff kommt und das jeweilige Eingriffselement (9) des anderen der jeweiligen unabhängigen Karren (7) mit dem jeweiligen hinteren Paket (3) in Eingriff kommt; wobei die Betätigungseinheit ferner konfiguriert ist, die unabhängigen Karren (7) jedes Paars unabhängiger Karren (7) so zu steuern, dass die Pakete (3) der jeweiligen Gruppe (2) von Paketen (3) zusammengeschoben werden;
**dadurch gekennzeichnet, dass** jeder unabhängige Karren (7) eine Antriebseinheit umfasst, die konfiguriert ist, das jeweilige Eingriffselement (9) zwischen einer jeweiligen Ruheposition und einer jeweiligen aktiven Position zu bewegen;
wobei die Antriebseinheit konfiguriert ist, eine Bewegung des jeweiligen Eingriffselements (9) aus der jeweiligen Ruheposition in die jeweilige aktive Position nach Bildung der jeweiligen Gruppe (2) von Paketen (3) und zum Abladen der jeweiligen Gruppe (2) von Paketen (3) von der eintrittsseitigen Transportvorrichtung (4) zu steuern; wobei das Gruppiersystem (5) zudem eine Energieübertragungsvorrichtung (10) umfasst, die konfiguriert ist, Energie an die Antriebseinheiten der unabhängigen Karren (7) während der Vorwärtsbewegung der unabhängigen Karren (7) entlang eines Energieübertragungsabschnitts (S1) des endlosen Wegs (S) zu übertragen und so die Energie bereitzustellen, die benötigt wird, um das jeweilige Eingriffselement (9) aus der jeweiligen Ruheposition in die jeweilige aktive Position zu steuern.

2. Paketgruppierungsvorrichtung nach Anspruch 1, wobei jede Antriebseinheit konfiguriert ist, eine Bewegung des jeweiligen Eingriffselements (9) aus der jeweiligen Ruheposition in die jeweilige aktive Position während der Beförderung des jeweiligen unabhängigen Karrens (7) entlang des Energieübertragungsabschnitts (S1) zu steuern; und/oder
die Energieübertragungsvorrichtung (10) so angeordnet ist, dass jede Antriebseinheit im Betrieb die Energie von der Energieübertragungsvorrichtung (10) empfängt, während sie die Bewegung des jeweiligen Eingriffselements (9) aus der jeweiligen Ruheposition in die jeweilige aktive Position steuert.

3. Paketgruppierungsvorrichtung nach Anspruch 1 oder 2, wobei der Energieübertragungsabschnitt (S1) eine geradlinige Form aufweist.

4. Paketgruppierungsvorrichtung nach einem der vorhergehenden Ansprüche, wobei jede Antriebseinheit konfiguriert ist, das jeweilige Eingriffselement (9) während der Beförderung der jeweiligen Gruppe (2) entlang eines geradlinigen Abschnitts des Beförderungswegs (P) von der jeweiligen Ruheposition in die jeweilige aktive Position zu steuern.

5. Paketgruppierungsvorrichtung nach einem der vorhergehenden Ansprüche, wobei die Energieübertragungsvorrichtung (10) eine oder mehrere Sendespulen umfasst und jede Antriebseinheit mindestens eine Empfangsspule umfassen kann;
wobei die eine oder die mehreren Sendespulen und jede Empfangsspule konfiguriert sind, Energie mittels Induktionsenergieübertragung zu übertragen.

6. Paketgruppierungsvorrichtung nach einem der vorhergehenden Ansprüche, ferner umfassend mindestens ein austrittsseitiges Transportsystem (15), das konfiguriert ist, um mindestens eine jeweilige Gruppe (2) von Paketen (3) aufzunehmen, die von der eintrittsseitigen Transportvorrichtung (4) während der Bewegung der jeweiligen Eingriffselemente (9) von der jeweiligen Ruheposition in die jeweilige aktive Position abgeladen werden.

7. Paketgruppierungsvorrichtung nach Anspruch 6, wobei das austrittsseitige Transportsystem (15) konfiguriert ist, um eine Vielzahl von Gruppen (2) von Paketen (3) aufzunehmen, um die Erzeugung einer Charge (16) von Gruppen (2) von Paketen (3) zu ermöglichen; wobei die Pakete (3) jeder Charge (16) eine Array-Anordnung darstellen.

8. Paketgruppierungsvorrichtung nach Anspruch 6 oder 7, umfassend mindestens zwei Energieübertragungsvorrichtungen, die jeweils konfiguriert sind, während der Beförderung der unabhängigen Karren (7) entlang der jeweiligen Energieübertragungsabschnitte (10) des endlosen Wegs (S) Energie an die Antriebseinheiten zu übertragen.

9. Paketgruppierungsvorrichtung nach einem der vorhergehenden Ansprüche, wobei die Pakete (3) jeder Gruppe (2) von Paketen (3) in einer Reihe angeordnet sind.

10. Paketgruppierungsvorrichtung nach einem der vorhergehenden Ansprüche, wobei die Betätigungseinheit konfiguriert ist, selektiv ein elektromagnetisches Feld zum selektiven Wechselwirken mit der Vielzahl von Karren (7) und zum selektiven Befördern der Vielzahl von Karren (7) zu erzeugen.

11. Paketgruppierungsvorrichtung nach einem der vorhergehenden Ansprüche, wobei das Gruppiersystem (5) mindestens einen mechanischen Nocken umfasst;
wobei jede Antriebseinheit mindestens einen jeweiligen Nockenläufer und mindestens eine Kopplungsgruppe umfasst, die mit dem jeweiligen Nockenläufer verbunden ist und den jeweiligen Nockenläufer mit dem jeweiligen Eingriffselement (9) koppelt;
wobei jede Antriebseinheit konfiguriert ist, den jeweiligen Nockenläufer zwischen einer jeweiligen Leerlaufposition und einer jeweiligen Betriebsposition zu steuern;
wobei jede Antriebseinheit konfiguriert ist, den jeweiligen Nockenläufer in der jeweiligen Betriebsposition selektiv so zu steuern, dass der Nockenläufer mit dem mechanischen Nocken interagiert;
wobei die Interaktion zwischen dem Nockenläufer und dem mechanischen Nocken derart ist, dass sich das jeweilige Eingriffselement (9) aus der jeweiligen Ruheposition in die jeweilige aktive Position bewegt.

12. Verpackungsmaschine, konfiguriert zum Bilden von mit einem schüttfähigen Produkt gefüllten Paketen (3), umfassend eine Gruppierungsvorrichtung (1, 1', 1") nach einem der vorhergehenden Ansprüche.

13. Verpackungsmaschine nach Anspruch 12, ferner umfassend eine Paketbildungsvorrichtung, die konfiguriert ist, die Pakete (3) zu bilden und zu füllen; wobei die Gruppierungsvorrichtung (1, 1', 1") stromabwärts der Paketbildungsvorrichtung angeordnet ist, um die Pakete (3) von der Paketbildungsvorrichtung zu empfangen.

14. Verfahren zum Gruppieren einer Folge von Paketen (3), das die folgenden Schritte umfasst:
- Befördern einer Folge von Paketen (3) entlang eines Beförderungswegs (P) einer eintrittsseitigen Transportvorrichtung (4); und
- Gruppieren der Pakete (3), die sich entlang des Beförderungswegs (P) vorwärts bewegen, in eine oder mehrere Gruppen (2) von Paketen (3) aus den Paketen (3), wobei jede Gruppe (2) von Paketen (3) ein vorderes Paket (3) und ein hinteres Paket (3) aufweist;
wobei der Schritt des Gruppierens die folgenden Teilschritte umfasst:
- selektives Befördern einer Vielzahl von Karren (7), die jeweils ein jeweiliges Eingriffselement (9) aufweisen und jeweils beweglich auf einem endlosen Träger (6) angeordnet sind, entlang eines endlosen Wegs (S) und so, dass für jede Gruppe (2) von Paketen (3) ein jeweiliges Paar unabhängiger Karren (7) gebildet wird, von denen das jeweilige Eingriffselement (9) eines der unabhängigen Karren (7) mit dem jeweiligen vorderen Paket (3) in Eingriff kommt und das jeweilige Eingriffselement (9) des anderen der jeweiligen unabhängigen Karren (7) mit dem jeweiligen hinteren Paket (3) in Eingriff kommt;
- Zusammenschieben der Pakete (3) der jeweiligen Gruppe (2) von Paketen (3); **gekennzeichnet durch**
- Steuern einer Bewegung des jeweiligen Eingriffselements (9) durch Betätigung einer jeweiligen Antriebseinheit des jeweiligen unabhängigen Karrens (7) zwischen einer jeweiligen Ruheposition und einer jeweiligen aktiven Position nach Bildung der jeweiligen Gruppe (2) von Paketen (3) und zum Abladen der jeweiligen Gruppe (2) von Paketen (3) von der eintrittsseitigen Transportvorrichtung (4);
- Übertragen von Energie von einer Energieübertragungsvorrichtung (10) an die Antriebseinheiten der unabhängigen Karren (7) während der Beförderung der unabhängigen Karren (7) entlang eines Energieübertragungsabschnitts (S1) des endlosen Wegs (S) und so, dass die Energie bereitgestellt wird, die benötigt wird, um die jeweiligen Eingriffselemente (9) während des Teilschritts des Bewegens aus der jeweiligen Ruheposition in die jeweilige aktive Position zu steuern.

15. Verfahren nach Anspruch 14, wobei der Teilschritt des Steuerns während des Schritts des Übertragens von Energie ausgeführt wird.

## Revendications

1. Appareil de regroupement d'emballages (1, 1', 1") pour regrouper une succession d'emballages (3), comprenant :
- un dispositif d'acheminement d'entrée (4) configuré pour faire avancer une succession d'emballages (3) le long d'un trajet d'avancement (P) ; et
- un système de regroupement (5) configuré pour former un ou plusieurs groupes (2) d'emballages (3) à partir des emballages (3) avançant le long du trajet d'avancement (P) ; chaque groupe (2) d'emballages (3) comprenant un emballage (3) de tête et un emballage (3) de fin ;
dans lequel le système de regroupement (5) comprend :
- un transporteur continu (6) ;
- une pluralité de chariots indépendants (7) couplés de manière mobile au transporteur continu (6) et ayant chacun au moins un élément de mise en prise (9) ; et
- une unité d'actionnement configurée pour faire avancer de manière sélective les chariots indépendants (7) le long du transporteur continu (6) et le long d'un trajet sans fin (S) ;
dans lequel l'unité d'actionnement est configurée pour commander l'avancement de la pluralité de chariots indépendants (7) de manière à former pour chaque groupe (2) d'emballages (3) une paire respective de chariots indépendants (7) dont l'élément de mise en prise (9) respectif de l'un des chariots indépendants (7) vient en prise avec l'emballage (3) de tête respectif et dont l'élément de mise en prise (9) respectif de l'autre des chariots indépendants (7) respectifs vient en prise avec l'emballage (3) de fin respectif ;
dans lequel l'unité d'actionnement est en outre configurée pour commander les chariots indépendants (7) de chaque paire de chariots indépendants (7) de manière à compacter les emballages (3) du groupe (2) respectif d'emballages (3) ;
**caractérisé en ce que** chaque chariot indépendant (7) comprend une unité d'alimentation configurée pour déplacer l'élément de mise en prise (9) respectif d'une position de repos respective à une position active respective ;
dans lequel l'unité d'alimentation est configurée pour commander le déplacement de l'élément de mise en prise (9) respectif de la position de repos respective à la position active respective après la formation du groupe (2) respectif d'emballages (3) et pour décharger le groupe (2) respectif d'emballages (3) du dispositif d'acheminement d'entrée (4) ;
dans lequel le système de regroupement (5) comprend également un dispositif de transfert d'énergie (10) configuré pour transférer de l'énergie aux unités d'alimentation des chariots indépendants (7) pendant l'avancement des chariots indépendants (7) le long d'une partie de transfert d'énergie (S1) du trajet sans fin (S) et de manière à fournir l'énergie nécessaire pour commander l'élément de mise en prise (9) respectif de la position de repos respective à la position active respective.

2. Appareil de regroupement d'emballages selon la revendication 1, dans lequel chaque unité d'alimentation est configurée pour commander le déplacement de l'élément de mise en prise (9) respectif de la position de repos respective à la position active respective pendant l'avancement du chariot indépendant (7) respectif le long de la partie de transfert d'énergie (S1) ; et/ou
le dispositif de transfert d'énergie (10) est agencé de telle sorte que chaque unité d'alimentation reçoit, en utilisation, l'énergie provenant du dispositif de transfert d'énergie (10) tout en commandant le déplacement de l'élément de mise en prise (9) respectif de la position de repos respective à la position active respective.

3. Appareil de regroupement d'emballages selon la revendication 1 ou 2, dans lequel la partie de transfert d'énergie (S1) a une forme rectiligne.

4. Appareil de regroupement d'emballages selon l'une quelconque des revendications précédentes, dans lequel chaque unité d'alimentation est configurée de manière à commander l'élément de mise en prise (9) respectif de la position de repos respective à la position active respective pendant l'avancement du groupe (2) respectif le long d'une partie rectiligne du trajet d'avancement (P).

5. Appareil de regroupement d'emballages selon l'une quelconque des revendications précédentes, dans lequel le dispositif de transfert d'énergie (10) comprend une ou plusieurs bobines d'émission et chaque unité d'alimentation peut comprendre au moins une bobine de réception ;
dans lequel les une ou plusieurs bobines d'émission et chaque bobine de réception sont configurées pour transférer de l'énergie au moyen d'un transfert d'énergie par induction.

6. Appareil de regroupement d'emballages selon l'une quelconque des revendications précédentes, comprenant en outre au moins un système d'acheminement de sortie (15) configuré pour recevoir au moins un groupe (2) respectif d'emballages (3) déchargés du dispositif d'acheminement d'entrée (4) pendant le déplacement des éléments de mise en prise (9) respectifs de la position de repos respective à la position active respective.

7. Appareil de regroupement d'emballages selon la revendication 6, dans lequel le système d'acheminement de sortie (15) est configuré pour recevoir une pluralité de groupes (2) d'emballages (3) de manière à permettre la génération d'un lot (16) de groupes (2) d'emballages (3) ; dans lequel les emballages (3) de chaque lot (16) présentent un agencement en réseau.

8. Appareil de regroupement d'emballages selon la revendication 6 ou 7, comprenant au moins deux dispositifs de transfert d'énergie et chacun étant configuré pour transférer de l'énergie aux unités d'alimentation pendant l'avancement des chariots indépendants (7) le long des parties de transfert d'énergie (10) respectives du trajet sans fin (S).

9. Appareil de regroupement d'emballages selon l'une quelconque des revendications précédentes, dans lequel les emballages (3) de chaque groupe (2) d'emballages (3) sont agencés en une rangée.

10. Appareil de regroupement d'emballages selon l'une quelconque des revendications précédentes, dans lequel l'unité d'actionnement est configurée pour générer de manière sélective un champ électromagnétique pour interagir de manière sélective avec la pluralité de chariots (7) et pour faire avancer de manière sélective la pluralité de chariots (7).

11. Appareil de regroupement d'emballages selon l'une quelconque des revendications précédentes, dans lequel le système de regroupement (5) comprend au moins une came mécanique ;
dans lequel chaque unité d'alimentation comprend au moins un suiveur de came respectif et au moins un groupe de couplage relié au suiveur de came respectif et couplant le suiveur de came respectif à l'élément de mise en prise (9) respectif ;
dans lequel chaque unité d'alimentation est configurée pour commander le suiveur de came respectif entre une position de repos respective et une position opérationnelle respective ;
dans lequel chaque unité d'alimentation est configurée de manière à commander de manière sélective le suiveur de came respectif dans la position opérationnelle respective de telle sorte que le suiveur de came interagit avec la came mécanique ;
dans lequel l'interaction entre le suiveur de came et la came mécanique est telle que l'élément de mise en prise (9) respectif se déplace de la position de repos respective à la position active respective.

12. Machine d'emballage configurée pour former des emballages (3) remplis d'un produit fluide comprenant un appareil de regroupement (1, 1', 1") selon l'une quelconque des revendications précédentes.

13. Machine d'emballage selon la revendication 12, comprenant en outre un appareil de formage d'emballage configuré pour former et remplir les emballages (3) ; dans lequel l'appareil de regroupement (1, 1', 1") est agencé en aval de l'appareil de formage d'emballage de manière à recevoir les emballages (3) en provenance de l'appareil de formage d'emballage.

14. Procédé de regroupement d'une succession d'emballages (3) comprenant les étapes suivantes :
- l'avancement d'une succession d'emballages (3) le long d'un trajet d'avancement (P) d'un dispositif d'acheminement d'entrée (4) ; et
- le regroupement des emballages (3) avançant le long du trajet d'avancement (P) en un ou plusieurs groupes (2) d'emballages (3) à partir des emballages (3), chaque groupe (2) d'emballages (3) ayant un emballage (3) de tête et un emballage (3) de fin ;
dans lequel l'étape de regroupement comprend les sous-étapes suivantes :
- l'avancement de manière sélective d'une pluralité de chariots (7), chacun ayant un élément de mise en prise (9) respectif et chacun étant agencé de manière mobile sur un transporteur continu (6), le long d'un trajet sans fin (S) et de manière à former pour chaque groupe (2) d'emballages (3) une paire respective de chariots indépendants (7) dont l'élément de mise en prise (9) respectif de l'un des chariots indépendants (7) vient en prise avec l'emballage (3) de tête respectif et l'élément de mise en prise (9) respectif de l'autre des chariots indépendants (7) respectifs vient en prise avec l'emballage (3) de fin respectif ;
- le fait de compacter les emballages (3) du groupe (2) respectif d'emballages (3) ; **caractérisé par**
- la commande d'un déplacement par l'actionnement d'une unité d'alimentation respective du chariot indépendant (7) respectif de l'élément de mise en prise (9) respectif d'une position de repos respective à une position active respective après la formation du groupe (2) respectif d'emballages (3) et pour décharger le groupe (2) respectif d'emballages (3) du dispositif d'acheminement d'entrée (4) ;
- le transfert d'énergie d'un dispositif de transfert d'énergie (10) aux unités d'alimentation des chariots indépendants (7) pendant l'avancement des chariots indépendants (7) le long d'une partie de transfert d'énergie (S1) du trajet sans fin (S) et de manière à fournir l'énergie nécessaire pour commander les éléments de mise en prise (9) respectifs de la position de repos respective à la position active respective pendant la sous-étape de déplacement.

15. Procédé selon la revendication 14, dans lequel la sous-étape de commande est exécutée pendant l'étape de transfert d'énergie.
